(19) Europäisches Patentamt / European Patent Office / Office européen des brevets

(11) **EP 2 246 293 B1**

(12) **FASCICULE DE BREVET EUROPEEN**

(45) Date de publication et mention
de la délivrance du brevet:
**08.02.2012 Bulletin 2012/06**

(51) Int Cl.:
*C01B 3/36* (2006.01)    *C01B 3/46* (2006.01)
*C01B 13/02* (2006.01)    *C10J 3/00* (2006.01)

(21) Numéro de dépôt: **10290157.6**

(22) Date de dépôt: **24.03.2010**

(54) **Procédé intégré de production d'énergie et/ou de gaz de synthèse par production d'oxygène in situ, combustion et gazéification en boucle chimique**

Integriertes Verfahren zum Generieren von Energie und/oder Synthesegas durch Herstellung von Sauerstoff in situ, Verbrennung und Vergasung in einem chemischen Kreisprozess

Integrated process for production of energy and/or synthesis gas by production of oxygen in situ, combustion and gasification in a chemical cycle

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.04.2009 FR 0902096**

(43) Date de publication de la demande:
**03.11.2010 Bulletin 2010/44**

(73) Titulaire: **IFP Energies nouvelles
92852 Rueil-Malmaison Cedex (FR)**

(72) Inventeurs:
• **Hoteit, Ali**
  **69003 Lyon (FR)**
• **Guillou, Florent**
  **69007 Lyon (FR)**
• **Lambert, Arnold**
  **42410 Chavanay (FR)**
• **Roesler, John**
  **38200 Vienne (FR)**

(56) Documents cités:
**WO-A2-2007/082089    WO-A2-2008/036902**

• FAN L ET AL: "Utilization of chemical looping strategy in coal gasification processes" PARTICUOLOGY,, vol. 6, no. 3, 1 juin 2008 (2008-06-01), pages 131-142, XP022938319 ISSN: 1674-2001 [extrait le 2008-05-22]
• LEION ET AL: "The use of petroleum coke as fuel in chemical-looping combustion" FUEL, IPC SCIENCE AND TECHNOLOGY PRESS, GUILDFORD, GB, vol. 86, no. 12-13, 23 mai 2007 (2007-05-23), pages 1947-1958, XP022093889 ISSN: 0016-2361
• MATTISSON T ET AL: "Chemical-looping combustion using syngas as fuel" INTERNATIONAL JOURNAL OF GREENHOUSE GAS CONTROL APRIL 2007 ELSEVIER GB, vol. 1, no. 2, avril 2007 (2007-04), pages 158-169, XP002562721
• ANTHONY E J: "Solid looping cycles: A new technology for coal conversion" INDUSTRIAL AND ENGINEERING CHEMISTRY RESEARCH 20080319 AMERICAN CHEMICAL SOCIETY US, vol. 47, no. 6, 19 mars 2008 (2008-03-19), pages 1747-1754, XP002562722

**Description**

Compte tenu des évolutions climatiques observées ces dernières décennies et de celles prévisibles à long terme, la maîtrise des émissions de gaz à effet de serre devient une exigence de plus en plus forte pour tous les secteurs économiques, et en particulier ceux concernant la production d'énergie. Une des différentes voies possibles pour maîtriser les rejets de gaz à effet de serre à l'atmosphère est le captage et la séquestration du carbone. Cette option est spécialement adaptée dans le cas de l'utilisation centralisée d'énergies fossiles. La plupart des solutions envisagées induisent une pénalité énergétique importante, avec une autoconsommation de l'ordre de 20 à 30%.

Parmi les moyens de combustion permettant la capture du $CO_2$, les unités d'oxycombustion présentent l'avantage de produire des fumées de combustion exemptes d'azote venant de l'air de combustion puisque la combustion se fait à partir d'oxygène pur. Un tel procédé est décrit, par exemple, dans le brevet WO2007039687A. Cet oxygène est produit par une unité de séparation d'air (air séparation unit, ASU). Un inconvénient de ce mode de combustion et des ASU en particulier est leur forte consommation énergétique et leur coût d'investissement élevé qui augmente fortement le coût global du captage.

Une solution est donc d'utiliser un procédé de combustion en boucle chimique. La combustion en boucle chimique présente un potentiel important en termes d'efficacité énergétique et de réduction des coûts. Ce procédé évite la pénalité énergétique liée à la séparation de l'oxygène de l'air. Il repose sur la capacité de transfert d'oxygène de certains matériaux tels que les oxydes métalliques. Un réacteur à air sert à oxyder les transporteurs d'oxygène préparés sous forme de fines particules qui sont alors transférées dans un réacteur à combustible où elles sont réduites par la combustion du combustible. Ce procédé est généralement réalisé à l'échelle pilote sous forme de deux lits fluidisés échangeant des flux de solides : le réacteur à air étant alors un réacteur de type fluidisation rapide au sommet duquel le flux d'air appauvri en oxygène et les particules sont séparés par un cyclone, les particules descendant par gravité dans le réacteur à combustible constitué par un lit fluidisé dense, où un débordement réalise la réinjection des solides au bas du riser, tandis que les gaz de combustion (essentiellement $CO_2$ et $H_2O$) sont évacués par le ciel de ce lit fluidisé dense. Le brevet FR 2 850 156 décrit notamment le principe de la combustion en boucle chimique, dans un procédé dédié à la combustion du charbon.

Dans le cas des combustibles solides, en sortie du réacteur de réduction il subsiste des imbrûlés. Ceux-ci sont emmenés avec le porteur d'oxygène dans le réacteur air où ils vont être brûlés, mais cela produit alors du CO2 mélangé avec l'azote, ce qui affecte le taux de captage de l'unité. Pour éviter cela, il est nécessaire de disposer d'un équipement spécifique de séparation entre particules de nature différente, mais de taille comparable, d'où la complexité du système, en particulier dans le cas d'extrapolation industrielle, à grande échelle.

Des essais d'intégration de la boucle chimique dans des installations de conversion d'hydrocarbures ont été mis en oeuvre.

Par exemple, le document WO2007082089A2 consiste en un procédé en trois étapes, qui met en évidence l'utilisation d'une recirculation des oxydes métalliques pour la production de l'hydrogène. Dans un premier réacteur, une combustion totale du combustible permet de produire CO2, H2O. La production d'hydrogène est réalisée par réoxydation de l'oxyde métallique à l'aide de vapeur d'eau. Cette réalisation impose des débits de vapeur importants et donc la nécessité de chauffer et d'évaporer une quantité importante d'eau avant introduction dans le réacteur oxydation, ce qui entraîne un bilan énergétique limitant.

La production d'hydrogène peut également être effectuée par gazéification : la demande de brevet WO2008036902A2 décrit par exemple un procédé de gazéification d'hydrocarbures, qui est mis en oeuvre dans un agencement classique de deux zones réactionnelles.

Cependant, un problème auquel est confronté l'homme du métier voulant produire du gaz de synthèse (donc de l'hydrogène) par gazéification est la cinétique des réactions qui ont lieu dans le réacteur gazéification ainsi que les températures élevées de réactions dans le réacteur gazéification. Le temps de séjour nécessaire des réactifs est donc important. Ceci affecte directement les tailles des installations et plus spécifiquement les tailles des réacteurs mis en jeu, ce qui entraîne des coûts d'investissement élevés.

Certains porteurs d'oxygène ont la capacité de relarguer spontanément une partie de leur oxygène dans un milieu pauvre en oxygène. Ainsi, nous avons découvert que la présence d'un réacteur de production d'oxygène au sein d'une boucle chimique permet de gazéifier le combustible avec un mélange enrichi à l'oxygène en évitant le contact direct solide - combustible solide. On peut ainsi éviter de recourir à des équipements de séparation solide - solide. Cette configuration particulière présente en outre l'avantage d'améliorer le bilan énergétique de l'étape de gazéification, très endothermique en l'absence d'oxygène, mais aussi d'accélérer les réactions puisque les réactions qui interviennent sont des réactions entre solide et gaz (et non plus entre solide et solide). Le procédé selon l'invention est particulièrement avantageux pour la gazéification des charges lourdes.

## Description de l'invention

### Résumé de l'invention

L'invention concerne un procédé de production d'énergie et/ou de gaz de synthèse par gazéification d'au moins une charge liquide et/ou solide dans au moins une boucle chimique comprenant au moins quatre zones réactionnelles distinctes d'oxydation, réduction, gazéification et production d'oxygène, dans lequel :

a) on produit de l'oxygène dans une zone réactionnelle de production d'oxygène R2 en exposant un oxyde métallique dans son état d'oxydation maximal à une atmosphère gazeuse à faible pression partielle d'oxygène constituée d'un gaz vecteur comprenant les effluents de réduction;

b) on transporte l'oxygène produit à l'étape a) au moyen du gaz vecteur éventuellement sous pression dans une zone réactionnelle de gazéification R4 et on effectue la gazéification de la charge liquide et/ou solide par mise au contact dudit gaz vecteur enrichi en oxygène à haute température avec ladite charge pour produire le gaz de synthèse CO + H2;

c) on effectue la réduction du solide porteur d'oxygène pour libérer de l'oxygène permettant d'oxyder le gaz de synthèse, dans une zone réactionnelle de réduction R3, la réaction de réduction dans ladite zone réactionnelle de réduction étant exothermique.

d) on oxyde le solide porteur d'oxygène, qui a été au moins en partie réduit pour fournir de l'oxygène au système, au contact de l'air afin de lui rendre son état d'oxydation maximal, dans une zone réactionnelle d'oxydation R1, et dans lequel on utilise la chaleur fournie par les réactions intervenant dans ladite zone réactionnelle d'oxydation R1 et dans ladite zone réactionnelle de réduction R3 pour permettre le fonctionnement énergétique du procédé.

Dans un mode de réalisation, le gaz de synthèse est produit sous pression à l'étape b) et on effectue la détente du gaz de synthèse produit avant la réduction du solide porteur d'oxygène à l'étape c).

Au moins une partie du gaz de synthèse produit peut être utilisée au sein du procédé, pour apporter la chaleur nécessaire au fonctionnement et éventuellement produire de la chaleur excédentaire qui pourra être valorisée.

De préférence, au moins une partie du gaz de synthèse est envoyée dans la zone réactionnelle de réduction, voire la totalité du gaz de synthèse.

Au moins une partie du gaz de synthèse produit peut être valorisée en sortie de la zone réactionnelle de gazéification.

La charge liquide et/ou solide peut être choisie parmi le charbon, le coke de pétrole ou les charges liquides dont moins de 10% a un point d'ébullition inférieur à 340°C.

Dans un mode de réalisation, les zones réactionnelles de réduction, oxydation et production d'oxygène sont des zones réactionnelles distinctes situées dans un même réacteur. Le réacteur peut alors être un réacteur rotatif.

Dans un autre mode de réalisation, les zones réactionnelles de réduction, oxydation et production d'oxygène sont situées dans des réacteurs distincts.

De l'énergie excédentaire exportable peut être récupérée par échange de chaleur à l'intérieur des zones réactionnelles ou sur les effluents gazeux.

Avantageusement :

- la fraction de capacité de transfert restante X des oxydes métalliques est comprise entre 0.8 et 1 en sortie de la zone réactionnelle d'oxydation R1 ;
- la fraction de capacité de transfert restante X est comprise entre 0 et 0,3 en sortie de la zone réactionnelle de réduction R3 ;
- la fraction de capacité de transfert totale $\Delta X$ est comprise entre 0,01 et 1 dans la zone de production d'oxygène R2.

De manière très préférée :

- la fraction de capacité de transfert restante X des oxydes métalliques est comprise entre 0,95 et 1 en sortie de la zone réactionnelle d'oxydation R1 ;
- la fraction de capacité de transfert restante X est comprise entre 0 et 0,1 en sortie de la zone réactionnelle de réduction R3 ;
- la fraction de capacité de transfert totale $\Delta X$ est comprise entre 0,05 et 0,5 dans la zone de production d'oxygène R2.

L'invention concerne l'utilisation du procédé décrit ci-dessus pour la production de chaleur.

L'invention concerne également l'utilisation du procédé décrit ci-dessus pour la production de gaz de synthèse sous pression.

**Liste des figures**

La figure 1 est un schéma de principe de l'invention. La figure 1 illustre les flux des oxydes métalliques, et des charges solides, liquides et/ou gazeuses dans la configuration de base du procédé selon l'invention.

La figure 2 illustre un mode de réalisation de l'invention concernant la production de gaz de synthèse sous pression.

Les figures 3a et 3b illustrent un mode de réalisation de l'invention dans lequel le procédé est mis en oeuvre en réacteur rotatif.

**Description détaillée de l'invention**

Définitions

Dans la description qui suit, on appelle "solide porteur d'oxygène" tout oxyde métallique pour lequel le degré d'oxydation du métal peut varier, en fonction de sa teneur en oxygène. Cette variation peut être exploitée pour transporter l'oxygène entre deux milieux réactifs. Dans un milieu oxydant riche en oxygène $O_2$, on maximise le degré d'oxydation du métal, c'est-à-dire que l'on maximise la teneur en oxygène du solide. Dans un milieu pauvre en oxygène $O_2$, le solide précédemment oxydé va relarguer spontanément une partie de son oxygène et voir son état d'oxydation diminuer par rapport à son degré d'oxydation lorsqu'il était complètement oxydé.
On définit également un "solide porteur d'oxygène" par sa capacité de transfert d'oxygène réversible, c'est-à-dire la quantité d'oxygène que ce porteur peut échanger avec le milieu réactionnel entre son état le plus oxydé et le moins oxydé, et ce de façon réversible.
On définit X comme la fraction de la capacité totale de transfert d'oxygène restante dans l'oxyde.
On définit enfin $\Delta X$ comme une fraction de la capacité de transfert d'oxygène totale.
Le fonctionnement du procédé selon l'invention se fait dans quatre zones réactives ou zones réactionnelles, qui peuvent être composées de réacteurs communs ou séparés et qui se distinguent par les réactions qui s'y produisent. Par esprit de simplification, dans les exemples suivants, chaque zone réactive ou zone réactionnelle sera associée à un réacteur. On les définit comme suit :

- réacteur de production d'oxygène (zone réactionnelle R2) : le solide porteur d'oxygène (oxyde métallique dans son état d'oxydation maximal) est exposé à une pression d'oxygène maintenue basse par le balayage d'un gaz vecteur ou au moyen d'une dépression. Cela a pour effet de faire sortir une partie de l'oxygène contenu dans le solide.
- réacteur de gazéification (zone réactionnelle R4) : l'oxygène extrait du solide est comprimé et amené au moyen du gaz vecteur au contact de la charge liquide ou solide à haute température de façon à la gazéifier. C'est ici qu'est produit le gaz de synthèse, (avantageusement) sous pression. Une partie du gaz produit peut être envoyée hors du procédé pour valorisation éventuelle, la partie restante (qui peut être la totalité) est utilisée au sein du procédé, d'une part pour apporter la chaleur nécessaire au fonctionnement et d'autre part pour éventuellement produire de la chaleur qui pourra être valorisée.
- réacteur de réduction (dit également "réacteur fuel", zone réactionnelle R3) : le gaz de synthèse produit est tout d'abord détendu (source possible d'énergie) puis amené au contact du solide porteur d'oxygène. En passant sous une forme plus réduite, le porteur d'oxygène libère de l'oxygène qui sera utilisé pour oxyder le gaz de synthèse. Cette réaction est globalement exothermique et constitue une source de chaleur du procédé.
- réacteur d'oxydation (dit également "réacteur air", zone réactionnelle R1) : le solide porteur d'oxygène, qui a été au moins en partie réduit pour fournir de l'oxygène au système, est réoxydé au contact de l'air dans ce réacteur sous sa forme la plus oxydée. Cette étape est exothermique et constitue l'autre source de chaleur du procédé.

Description générale du procédé selon l'invention :

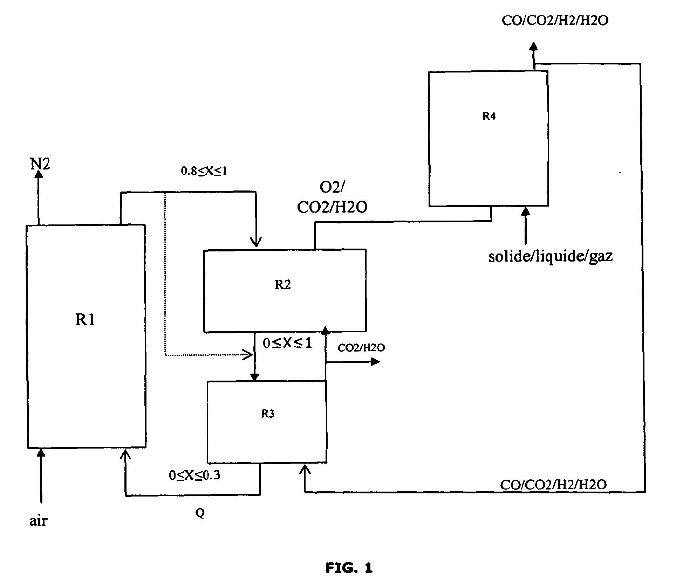

Le concept de base (Figure 1) du procédé selon l'invention repose sur une configuration qui comprend :

1. un réacteur "air" (zone réactionnelle R1) où se déroule la réaction d'oxydation des oxydes métalliques après réduction ;
2. un réacteur de "production d'oxygène" (zone réactionnelle R2) où le solide porteur d'oxygène relargue spontanément une partie de son oxygène dans un gaz vecteur composé des effluents de réduction, pauvres en oxygène. L'oxygène produit est ainsi transporté par le gaz vecteur vers le réacteur de gazéification ;

3. un réacteur de "gazéification" (zone réactionnelle R4) des charges solides et/ou liquides pour produire un gaz de synthèse au moyen d'un gaz oxydant enrichi en oxygène issu de R2 ;

4. un réacteur de "réduction" (zone réactionnelle R3) où se déroule la réaction de combustion de la charge gazéifiée en présence de l'oxygène présent dans les oxydes métalliques ;

5. des organes de séparations particules - gaz (cyclone) ;

6. des organes d'étanchéité et de liaison entre les réacteurs (siphon).

Dans le procédé selon l'invention, la fraction de capacité de transfert des oxydes métalliques est généralement fonction de la zone réactionnelle. Avantageusement :

- la fraction de capacité de transfert restante X est comprise entre 0,8 et 1, préférentiellement entre 0,95 et 1 ce qui correspond à l'état le plus oxydé, en sortie de zone réactionnelle R1 ;
- la fraction de capacité de transfert d'oxygène totale $\Delta X$ est comprise entre 0,01 et 1, préférentiellement entre 0.05 et 0.5, ce qui correspond à la quantité d'oxygène relargué spontanément par le matériau, dans la zone de production d'oxygène R2 ;
- la fraction de capacité de transfert restante X est comprise entre 0 et 0,3, préférentiellement entre 0 et 0,1, ce qui correspond à l'état le plus réduit, en sortie de zone réactionnelle R3.

Séquence de circulation de solide entre les réacteurs :

Dans la description des figures qui suit, on désignera par simplification par le terme "réacteur" une zone réactionnelle comprenant un ou plusieurs réacteurs dans lesquels se déroulent des réactions de même nature.

Figure 1 :

Un débit d'oxydes métalliques circule du réacteur air (réacteur d'oxydation R1) dans son état le plus oxydé ($0.8 \leq X \leq 1$ et préférentiellement $0.95 \leq X \leq 1$) vers le réacteur de production d'oxygène (R2) où le matériau relargue spontanément son oxygène ($0.01 \leq \Delta X \leq 1$, préférentiellement $0.05 \leq \Delta X \leq 0.5$) dans un flux de gaz vecteur composé (au moins en partie) d'effluent de la réduction (R3) ($CO2+H2O$) pauvre en oxygène. Cet effluent gazeux est transporté vers le réacteur de gazéification R4 où il est mis en contact d'un combustible pour produire un gaz de synthèse. Celui-ci est envoyé tout ou partie dans le réacteur de réduction (R3), le reste pouvant être valorisé dans des applications telles que Fischer-Tropsch ou pile à combustible. Dans le réacteur de réduction (R3), le gaz de synthèse réagit au contact du porteur d'oxygène. Cette réaction est exothermique et produit un gaz quasiment exclusivement composé de dioxyde de carbone et de vapeur d'eau. A l'issue de cette réaction, le solide porteur d'oxygène est dans sa forme la plus réduite ($0 \leq x \leq 0.3$, préférentiellement $0 \leq x \leq 0.1$) et est renvoyé vers le réacteur d'oxydation (R1). Il y est réoxydé dans son état d'oxydation maximal ($0.8 \leq x \leq 1$, préférentiellement $0.95 \leq x \leq 1$) au cours d'une réaction exothermique avec l'oxygène de l'air. Le procédé sera complété aussi par des unités de traitement de soufre sous forme $H_2S$ et/ou $SO_2$ si le combustible contient du soufre.

Figure 2 :

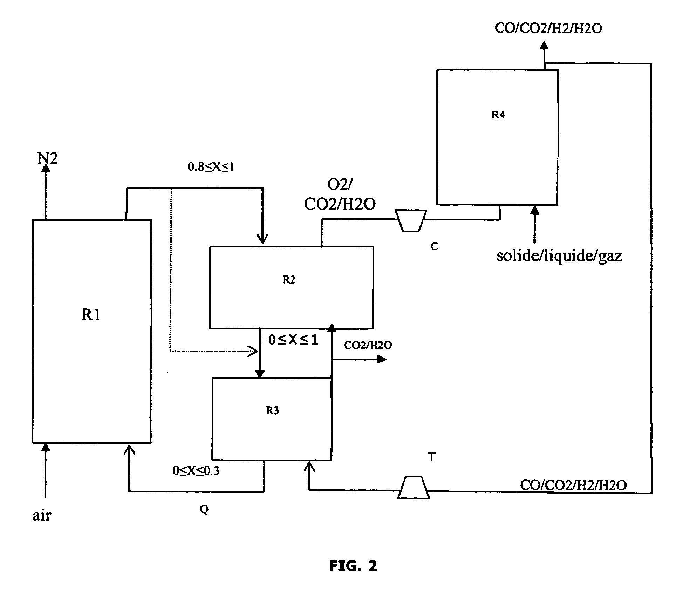

Un avantage du procédé selon l'invention est de pouvoir produire du gaz de synthèse sous pression, dans un mode de réalisation illustré par la figure 2. Pour cela on ajoute un ensemble compresseur (C) - turbine (T) au dispositif permettant de mettre en oeuvre le procédé selon l'invention. Le flux de gaz vecteur riche en oxygène ($CO2+H2O+O2$) est ainsi comprimé avant d'être introduit dans le réacteur R4 de gazéification, jusqu'à des pressions de l'ordre de 40 bars. La gazéification s'effectue alors à haute pression (40 bars) et haute température (jusqu'à plus de 1000°C). Le gaz de synthèse ($CO+H2$) issu de la réaction de gazéification est alors lui aussi sous pression. Le gaz de synthèse renvoyé au réacteur de réduction est détendu dans une turbine pour récupérer l'énergie.

Figures 3A et 3B :

Figure 3A :

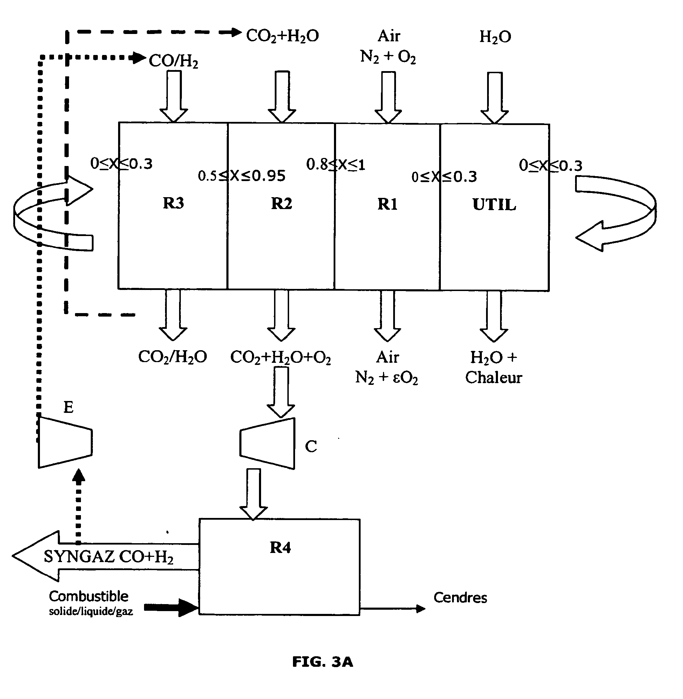

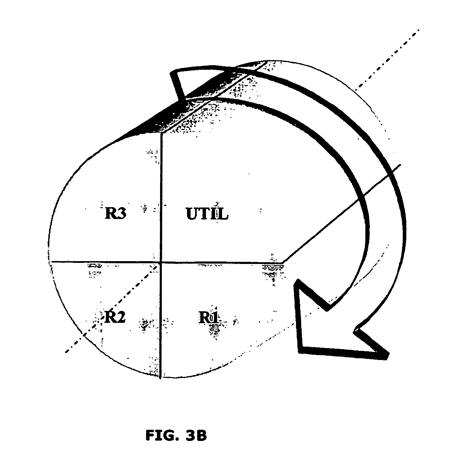

Les principes exposés au travers des figures 1 et 2 peuvent être repris dans une configuration comprenant un réacteur rotatif, mode de réalisation illustré par les figures 3A et 3B, où les réactions de production d'oxygène, de réduction et d'oxydation ont lieu au sein d'une même structure solide tournante. La rotation figure ainsi le transport du solide porteur d'oxygène entre les réacteurs R1, R2 et R3 décrits précédemment.

Dans ce mode de réalisation particulier, le transport du solide entre les différentes zones réactionnelles est opéré au moyen d'un réacteur tournant; il s'agit d'un dispositif le plus souvent constitué d'une matrice poreuse cylindrique autorisant le passage des gaz le long de son axe de rotation. La phase active, c'est-à-dire le porteur d'oxygène, est immobilisé sur cette matrice. La rotation du réacteur cylindrique se fait en face des arrivées des réactifs et des évents. La portion de cylindre comprise entre un couple entrée de réactifs/évent constitue une zone réactionnelle.

Par analogie avec les dispositifs décrits précédemment on définit quatre zones réactionnelles :

R1 : zone réactionnelle alimentée en air "$N_2+O_2$", la rotation du cylindre fait que la section de cylindre qui entre dans la zone réactionnelle supporte le solide porteur d'oxygène partiellement réduit ($0 \leq X \leq 0.3$) et que la section de cylindre qui sort de la zone réactionnelle supporte le solide porteur d'oxygène dans son état le plus oxydé ($0.8 \leq X \leq 1$, préférentiellement $0.95 \leq X \leq 1$). La sortie des gaz de la zone réactionnelle R1 se fait par un évent, conduisant l'air appauvri en oxygène "$N_2$" à l'extérieur de l'unité. La zone réactionnelle R1 correspond à ce qui a été défini précédemment comme le réacteur air.

R2 : zone réactionnelle alimentée en $CO_2$ et en $H_2O$ qui suit la zone R1 dans la séquence de rotation du cylindre. La portion de cylindre qui entre dans cette zone porte ainsi le porteur d'oxygène dans son état le plus oxydé ($0.8 \leq X \leq 1$, préférentiellement $0.95 \leq X \leq 1$). Cette zone réactionnelle correspond à ce qui a été défini précédemment comme le réacteur de production d'oxygène, les gaz qui sortent de cette zone par l'évent sont constitués de $CO_2$, d'$H_2O$, mais aussi d'$O_2$ destinés à la gazéification de la charge. Cet effluent est compressé. La portion de cylindre qui sort de la zone réactionnelle porte le solide partiellement réduit ($0.01 \leq \Delta X \leq 0.99$ et préférentiellement $0.05 \leq \Delta X \leq 0.50$).

R4 : cette zone n'est pas comprise dans le cycle réactionnel du réacteur tournant. Il s'agit d'un réacteur de gazéification d'hydrocarbure, externe au réacteur tournant, alimenté en gaz oxydants sous pression par les effluents de la zone réactionnelle R3 et alimenté en charge hydrocarbure solide ou liquide. L'effluent gazeux est constitué majoritairement et de façon préférentielle de gaz de synthèse $H_2$ + CO sous pression. Selon le mode de fonctionnement choisi, tout ou partie du gaz de synthèse est envoyé en zone de combustion R3 selon que l'on veut respectivement favoriser la production de chaleur ou de gaz de synthèse. Le gaz de synthèse étant sous pression, il est détendu dans une turbine avant d'être envoyé vers la zone réactionnelle R3.

R3 : zone réactionnelle alimentée en gaz de synthèse $H_2$ + CO détendu par le gazéifieur externe (zone réactionnelle R4). La zone réactionnelle R3 suit la zone réactionnelle R2 dans la séquence de rotation du cylindre. Cette zone réactionnelle correspond à ce qui a été défini précédemment comme le "réacteur fuel". La portion de cylindre qui entre dans la zone R3 porte le solide dans un état oxydé au degré d'oxydation correspondant à la sortie de la zone "réacteur de production d'oxygène" ($0.01 \leq X \leq 1$ et préférentiellement $0.50 \leq X \leq 0.95$). Le porteur est réduit au contact du gaz de synthèse. L'effluent gazeux qui sort de la zone réactionnelle R3 est quasi exclusivement constitué de $CO_2$ et $H_2O$. Le solide porteur d'oxygène qui sort de la zone réactionnelle R3 est dans son état le plus réduit de tout le cycle réactionnel ($0 \leq X \leq 0.3$ préférentiellement $0 \leq X \leq 0.1$).

UTIL : cette zone réactionnelle correspond à l'utilisation de la chaleur. Les réactions qui ont lieu sur le cylindre sont globalement exothermiques. Dans la zone UTIL on va surchauffer de la vapeur au contact du solide pour équilibrer le bilan thermique du cycle. C'est ce qui permet de fournir de la chaleur à l'utilisateur. Au cours de cette étape, une réoxydation partielle est possible ($0 \leq X \leq 0.9$ et préférentiellement $0 \leq X \leq 0.1$).

Figure 3B :

Cette figure représente une proposition de répartition spatiale des zones réactives pour le système à réacteur tournant décrit précédemment. Chaque zone occupe ainsi une portion de cylindre contiguë à la suivante autour l'axe de rotation du cylindre.

**Nature des oxydes métalliques**

Les oxydes métalliques utilisables dans le procédé selon l'invention peuvent être choisis parmi les oxydes des éléments de transition des colonnes IIIB à IIB (par exemple Fe, Ti, Ni, Cu, Mo, Mn, Co, V) de la classification périodique, seuls ou en mélange, associés ou non à un liant de type céramique leur conférant une résistance mécanique améliorée (les liants susceptibles d'être utilisés sont par exemple l'alumine, les aluminates de type spinelle, la silice, le dioxyde de titane, le kaolin, la cérine zircone, la bentonite ou des catalyseurs usagés.) et éventuellement une meilleure capacité de transfert d'oxygène (notamment pour les liants de type cérine-zircone). Sont utilisables également les oxydes de type perovskite, spinelle, olivine, hematite, ilmenite, pyrochlore. Il s'agit de familles d'oxydes simples ou mixtes dont la structure est bien déterminée.

Les oxydes métalliques peuvent être sous la forme de minerais naturels (comme l'ilménite, l'hématite par exemple) ou sous une forme synthétique optimisée pour obtenir une meilleure capacité de transfert d'oxygène.

De préférence, ces solides sont conditionnés sous la forme de poudre, de diamètre de Sauter compris préférentiellement entre 30 et 500 microns, et de masse volumique de grain comprise entre 1400 et 8000 kg/m3, préférentiellement entre 1400 et 5000 kg/m3.

**Conditions opératoires**

On s'assure d'avoir un design adapté pour que les réactions dans les réacteurs "air" (R1), production d'oxygène (R2), fuel (R3) et gazéification (R4) se déroulent à une température comprise entre 700 °C et 1200 °C.

Le temps de résidence de l'oxyde métallique dans le réacteur air (R1) dépend de l'état d'oxydation et/ou réduction de ces oxydes et peut être estimé entre 1 et 20 minutes.

Le temps de résidence de l'oxyde métallique dans le réacteur de production d'oxygène (R2) dépend de la nature du solide porteur d'oxygène et peut être estimé entre 1 seconde et 360 secondes.

Le temps de résidence de l'oxyde métallique dans le réacteur fuel (R3) dépend de la nature du combustible et peut être estimé entre 1 et 15 minutes.

Le temps de résidence de l'oxyde métallique dans le réacteur de gazéification (R4) dépend de la nature du combustible à gazéifier et peut être estimé entre 1 et 20 minutes.

Dans le cas du réacteur tournant, le temps de résidence de l'oxyde dans la partie UTIL de récupération de chaleur dépend de la quantité de chaleur à évacuer et de la nature du flux utilisé pour récupérer la chaleur produite. Le temps de résidence dans la partie UTIL peut être estimé entre 1 seconde et 600 secondes.

**Avantages spécifiques de l'invention**

Les avantages de l'invention énumérés ci-dessous sont décrits à titre non limitatif.

1. L'invention permet le couplage entre le procédé de combustion en boucle chimique "chemical looping combustion", le procédé de gazéification et la production d'oxygène.

2. L'invention permet d'injecter directement du charbon, du coke de pétrole ou des charges lourdes dans le réacteur de gazéification en contact avec l'oxygène fourni par le transporteur d'oxygène dans le réacteur de production d'oxygène. On désigne par charges lourdes des charges dont moins de 10% en masse a un point d'ébullition inférieur à 340°C.

3. L'invention permet de produire du gaz de synthèse sous pression dans le réacteur de gazéification par compression du gaz vecteur riche en oxygène de façon à économiser l'énergie, plus importante, qu'il faudrait pour gazéifier le gaz de synthèse (CO+H2) chaud en sortie d'unité.

4. L'invention permet d'appauvrir le gaz vecteur en eau par condensation pour en améliorer la compressibilité.

5. L'invention permet de récupérer la chaleur du gaz vecteur d'oxygène avant compression et l'énergie de détente du gaz de synthèse pour alimenter le compresseur du gaz vecteur d'oxygène.

6. L'invention permet l'utilisation de l'intégralité du gaz de synthèse, si nécessaire, pour produire de la chaleur au sein du procédé dans le réacteur de réduction.

7. L'invention permet la production de gaz de synthèse par le présent procédé en valorisant un maximum de gaz de synthèse en sortie du réacteur de gazéification et en recyclant le minimum nécessaire au bon fonctionnement du procédé.

8. L'invention permet de fournir l'énergie nécessaire pour la production de gaz de synthèse sous pression ainsi que la production de l'énergie et/ou de l'électricité dans le cas de la boucle chimique de combustion couplée à un réacteur de production d'oxygène.

9. Dans le procédé selon l'invention, la charge, de préférence une charge lourde, est gazéifiée avec un mélange enrichi à l'oxygène, ce qui rend le processus de gazéification exothermique (zone réactionnelle R4). De plus la combustion de gaz de synthèse dans le réacteur fuel est exothermique et conduit à augmenter l'efficacité énergétique du procédé en évitant d'avoir des étapes endothermiques qui nécessiteraient un apport externe d'énergie.

Les exemples ci-après montrent l'avantage par rapport aux autres technologies du procédé selon la présente invention, qui permet de produire du gaz de synthèse et/ou de la chaleur au moyen d'un dispositif incluant une boucle chimique avec un solide porteur d'oxygène et un gazéifieur de charge liquide ou solide sans qu'il y ait contact entre le solide porteur d'oxygène et la charge liquide ou solide, pour éviter le recours à des organes spécifiques de séparation solide-solide.

**Exemples**

Dans les exemples, deux modes de réalisation possibles de l'invention sont illustrés : dans le premier on cherche à maximiser la production de gaz de synthèse, dans le second on cherche à valoriser la charge sous la forme de production de chaleur. Dans chaque cas, les bilans matière et énergie sont présentés. Un cas général sera tout d'abord exposé pour expliciter les données utilisées dans ces exemples.

**Exemple 1 : Fonctionnement du procédé intégré selon l'invention**

Les conditions opératoires considérées à chaque étape sont les suivantes :

**Gazéification**

1) la réaction de gazéification est opérée de façon autotherme à une température qui est fonction de l'exothermicité de la réaction, donc de la quantité d'oxygène introduite;
2) les paramètres de fluidisation ne sont pas pris en compte;
3) les réactifs sont la charge solide ou liquide;
4) la réaction est endothermique en absence d'oxygène.

**Réduction**

1) la réaction de réduction est complète. Les produits de la réaction sont du $CO_2$ et de $H_2O$;
2) l'échange est idéal entre le transporteur d'oxygène et le combustible gazeux : il n'y a pas de limitation diffusionnelle, pas de formation de carbone, pas de perte de réactivité;
3) la réaction est exothermique.

**Oxydation**

1) la réaction d'oxydation est complète ;
2) l'échange est idéal entre le transporteur d'oxygène et l'air ;
3) la réaction est exothermique.

**Production d'oxygène**

1) l'avancement de la réaction est limité à 2% maximum ;
2) la réaction est endothermique.

Le solide porteur d'oxygène choisi est un oxyde mixte fer - manganèse pour lequel on considère que l'on peut extraire jusqu'à deux pourcents en poids de l'oxygène qu'il contient dans sa forme la plus oxydée. La réaction réversible d'oxydation considérée est la suivante, pour T > 1000 K :

$\{MnO + 3.Fe_2MnO_4\} + O_2 \rightarrow 5.(Fe_{0,6}Mn_{0,4})_2O_3$ $\Delta H_r$ = -85,76 kJ/mol($O_2$) à 1000 K

Les caractéristiques des formes oxydées et réduites sont les suivantes : forme oxydée : $(Fe_{0,6}Mn_{0,4})_2O_3$

Cp = 1,018 kJ/kg/K (valeur calculée par la méthode des contributions de groupe - [1] Mostafa et al., Ind. Eng. Chem. Res., Vol. 35, No. 1, 1996)

M = 158,96 g/mol

Les caractéristiques des formes oxydées et réduites sont les suivantes :

forme oxydée : $\{MnO + 3.Fe_2MnO_4\}$

Cp = 0,905 kJ/kg/K (valeur calculée par la méthode des contributions de groupe [-1] Mostafa et al., Ind. Eng. Chem. Res., Vol. 35, No. 1, 1996)

M = 762.81 g/mol

Pour les réactions de réduction, cela correspond à la combustion des différents composés du gaz de synthèse sur le solide :

Dihydrogène :
$H_2 + 5/2(Fe_{0,6}Mn_{0,4})_2O_3 \longrightarrow 1/2\{MnO + 3.Fe_2MnO_4\} + H_2O$ $\Delta H_r$ = -206,48 kJ/mol($H_2$) à 1000 K

Monoxyde de carbone :
$CO + 5/2(Fe_{0,6}Mn_{0,4})_2O_3 \longrightarrow 1/2\{MnO + 3.Fe_2MnO_4\} + CO_2$ $\Delta H_r$ = -238,55 kJ/mol(CO) à 1000 K

Méthane :
$CH_4 + 10.(Fe_{0,6}Mn_{0,4})_2O_3 \longrightarrow 2\{MnO + 3.Fe_2MnO_4\} + 2.H_2O + CO_2$ $\Delta H_r$ = -630,38 kJ/mol($CH_4$) à 1000 K

La réaction de gazéification de la charge est modélisée par une minimisation de l'énergie de Gibbs dont l'enthalpie est calculée en fonction des énergies de formation des différentes espèces présentes.

La charge choisie dans cet exemple est une charge liquide modèle $C_{18}H_{30}$ qui représente l'utilisation d'un fioul moyen.

Le débit de charge choisi va déterminer la quantité de solide à mettre en circulation dans la boucle en fonction des besoins en oxygène des opérations de gazéification et de combustion.

**Exemple 2 :** production de gaz de synthèse

La présente invention permet de moduler la production entre la maximisation de l'énergie thermique produite par le procédé ou la maximisation de la quantité de gaz de synthèse (Syngaz) sortant du procédé par rapport à la quantité de charge hydrocarbonée introduite.

Dans le présent exemple on cherche à maximiser la quantité de gaz de synthèse produite.

Réacteur de production d'oxygène :

Le solide porteur d'oxygène est balayé avec un gaz pour maintenir basse la pression partielle d'oxygène. Ce gaz sert aussi de gaz vecteur pour transporter l'oxygène dans le gazéifieur. On utilise ici les gaz chauds issus de la combustion du gaz de synthèse sur le solide, qui sont recyclés aux trois quarts. Ce gaz est composé d'eau et de dioxyde de carbone et arrive à une température de 902 °C et un débit de 11,4 kmol/h. La réaction de production d'oxygène est endothermique et consomme 444 kW sous forme de chaleur.

Phase solide :

| Oxyde | entrée du réacteur, T° = 900 °C | sortie du réacteur, T°= 897 °C |
|---|---|---|
| $(Fe_{0,6}Mn_{0,4})_2O_3$ | 3816 kmol/h | 3777 kmol/h |
| $\{MnO + 3.Fe_2MnO_4\}$ | 0 kmol/h | 7,63 kmol/h |

La température de sortie des gaz est aussi de 897 °C.

Réacteur de gazéification :

Dans ce réacteur, de multiples réactions ont lieu, on considère les réactions suivantes :

$C + H_2O \leftrightarrow CO + H_2,\ \Delta Hr_{298K} = 131\,kJ.mol^{-1}$

$C + CO_2 \leftrightarrow 2CO,\ \Delta Hr_{298K} = 173\,kJ.mol^{-1}$

$$C + \frac{1}{2}O_2 \longleftrightarrow CO,\ \Delta Hr_{298K} = -111\,kJ.mol^{-1}$$

$$C + O_2 \leftrightarrow CO_2, \; \Delta Hr_{298}K = -395 \, kJ.mol^{-1}$$

$$n.C + \frac{m}{2}.H_2 \longleftrightarrow C_nH_m \,, \; \Delta Hr_{298K} < 0$$

$$n.CO + \frac{n+m}{2}.H_2 \longleftrightarrow C_nH_m + n.H_2O \,, \; \Delta Hr_{298K} < 0$$

$$CO + H_2O \leftrightarrow CO_2 + H_2, \; \Delta Hr_{298}K = -41 \, kJ.mol^{-1}$$

$$C + 2.H_2 \leftrightarrow CH_2, \; \Delta Hr_{298K} = -74.87 \, kJ.mol^{-1}$$

$$4.C_nH_m \leftrightarrow m.CH_4 + (4n-m).C, \; \Delta Hr_{298K} < 0$$

Dans notre cas, on se place à l'équilibre et la détermination de la composition du gaz de synthèse se fait par minimisation de l'énergie de Gibbs.

Dans le procédé selon la présente invention, le gaz vecteur d'oxygène est comprimé avant gazéification de façon à gazéifier sous pression et obtenir un gaz de synthèse sous pression. Ici la dépense d'énergie pour comprimer le gaz vecteur d'oxygène est estimée à 166 kWe. La compression de ce gaz nécessite de le refroidir, ce qui est fait par de l'eau pour produire de la vapeur dans un échangeur type tube - calandre.

Bilan de la gazéification :

| Composé | Entrée du réacteur | Sortie du réacteur |
|---------|---------------------|---------------------|
| $CO_2$ | 6,21 kmol/h | 1,20 kmol/h |
| CO | 0 kmol/h | 28,79 kmol/h |
| $O_2$ | 7,63 kmol/h | 0 kmol/h |
| $H_2$ | 0 kmol/h | 19,63 kmol/h |
| $H_2O$ | 5,17 kmol/h | 1,67 kmol/h |
| $CH_4$ | 0 kmol/h | 3,16 kmol/h |
| $C_{18}H_{30}$ | 1,49 kmol/h | 0 kmol/h |

La gazéification s'opère à 40 bars, les réactifs entrent à 905 °C et sortent à 1058 °C du fait de l'exothermicité de la gazéification en présence d'oxygène.

La réaction produit ainsi un gaz de synthèse dont 75 % sont extraits du procédé pour être valorisés, soit 980 kg/h de gaz de synthèse à 40 bars et 1058 °C.

La partie restante du gaz de synthèse est destinée à la fois à produire la chaleur nécessaire au fonctionnement du procédé mais aussi, après combustion, à servir de gaz vecteur pour rapporter de l'oxygène au gazéifieur. Ce gaz chaud et sous pression est détendu pour générer de l'énergie, qui, complétée par celle produite par la boucle vapeur en amont du compresseur, doit alimenter le compresseur et ce dans un souci d'autonomie du procédé. L'énergie récupérée au niveau de la turbine est estimée à 99 kWe auxquels se rajoutent 127 kWe de la boucle vapeur.

Réacteur de réduction :

Dans ce réacteur, le gaz de synthèse est oxydé au contact du solide porteur d'oxygène selon les réactions et les enthalpies de réaction citées précédemment.

| Composé | Entrée du réacteur 897 °C | Sortie du réacteur 902 °C |
|---|---|---|
| CO2 | 0,30 kmol/h | 8,28 kmol/h |
| CO | 7,19 kmol/h | 0 kmol/h |
| H2 | 4,91 kmol/h | 0 kmol/h |
| H2O | 0,42 kmol/h | 6,91 kmol/h |
| CH4 | 0,79 kmol/h | 0 kmol/h |
| $(Fe_{0,6}Mn_{0,4})_2O_3$ | 3777 kmol/h | 3739 kmol/h |
| $\{MnO + 3.Fe_2MnO_4\}$ | 7,63 kmol/h | 15,26 kmol/h |

L'énergie récupérée au niveau de cette combustion est de 0,87 MWth.

75 % des fumées sont recyclées, le reste est extrait de l'unité. Il s'agit d'un flux composé uniquement d'eau et de dioxyde de carbone destiné à être récupéré, transporté et stocké. L'énergie potentiellement récupérable sur ce flux est estimée à 39 kWth.

Les fluides et solides sortent du réacteur de réduction à une température de 902 °C contre une température de 897 °C en entrée.

Valorisation de la chaleur :

La chaleur produite par le procédé et transportée par le solide est valorisable en sortie de réacteur de réduction. Pour que le bilan thermique soit équilibré, on ne valorise pas de chaleur à ce niveau.

Réacteur d'oxydation :

En sortie du réacteur de réduction, le solide est dans son état le plus réduit. Dans le réacteur d'oxydation, il est réoxydé dans sa forme la plus oxydée au contact d'un flux d'air.

| Composé | Entrée du réacteur | Sortie du réacteur |
|---|---|---|
| N2 | 58,0 kmol/h à 25 °C | 58,0 kmol/h à 900 °C |
| O2 | 15,4 kmol/h à 25 °C | 0 kmol/h |
| $(Fe_{0.6}Mn_{0.4})_2O_3$ | 3740 kmol/h à 902 °C | 3816 kmol/h à 900 °C |
| $\{MnO + 3.Fe_2MnO_4\}$ | 15,3 kmol/h à 902 °C | 0 kmol/h |

L'énergie fournie dans ce réacteur par la réaction d'oxydation et pour amener les composés à 1100 °C est de 935 kW. Une partie de cette énergie est valorisable en récupérant la chaleur sur le flux d'air appauvri, soit 0,17 MWth dans la boucle vapeur.

Au final ce procédé produit :

0,74 T/h de gaz de synthèse à 40 bar et 1058 °C et 5,13 MWth pour 0,37 T/h de charge C18H30.

Le gaz de synthèse a la composition suivante :

| Composé | fraction molaire |
|---|---|
| CO2 | 0,02 |
| CO | 0,53 |
| H2 | 0,36 |
| H2O | 0,03 |
| CH4 | 0,06 |

L'excédent de chaleur du procédé, soit 331kWth, est destiné au réchauffage de la charge qui nécessite 277 kWth.

**Exemple 3 :** production de chaleur

La présente invention permet de moduler la production entre :

- la maximisation de l'énergie thermique produite par le procédé;
- ou la maximisation de la quantité de gaz de synthèse (Syngaz) sortant du procédé par rapport à la quantité de charge hydrocarbonée introduite.

Dans le présent exemple on cherche à maximiser la quantité de chaleur produite par le procédé.

Réacteur de production d'oxygène :

Le solide porteur d'oxygène est balayé avec un gaz pour maintenir basse la pression partielle d'oxygène. Ce gaz sert aussi de gaz vecteur pour transporter l'oxygène dans le gazéifieur. On utilise ici les gaz chauds issus de la combustion du gaz de synthèse sur le solide qui sont recyclés aux trois quarts. Ce gaz est composé d'eau et de dioxyde de carbone et arrive à une température de 934 °C et un débit de 169 kmol/h. La réaction de production d'oxygène est endothermique et consomme 444 kW sous forme de chaleur.

Phase solide :

| Oxyde | entrée du réacteur, T° = 900 °C | sortie du réacteur, T°= 897 °C |
|---|---|---|
| $(Fe_{0,6}Mn_{0,4})_2O_3$ | 3816 kmol/h | 3777 kmol/h |
| $\{MnO + 3.Fe_2MnO_4\}$ | 0 kmol/h | 7,63 kmol/h |

La température de sortie des gaz est aussi de 897 °C.

Réacteur de gazéification :

Dans ce réacteur, de multiples réactions ont lieu, on considère les réactions suivantes :

$$C + H_2O \leftrightarrow CO + H_2, \Delta Hr_{298K} = 131 kJ.mol^{-1}$$

$$C + CO_2 \leftrightarrow 2CO, \Delta Hr_{298K} = 173 kJ.mol^{-1}$$

$$C + \frac{1}{2}O_2 \longleftrightarrow CO \,, \Delta Hr_{298K} = -111 kJ.mol^{-1}$$

$$C + O_2 \leftrightarrow CO_2, \Delta Hr_{298}K = -395 kJ.mol^{-1}$$

$$n.C + \frac{m}{2}.H_2 \longleftrightarrow C_nH_m \,, \Delta Hr_{298K} < 0$$

$$n.CO + \frac{n+m}{2}.H_2 \longleftrightarrow C_nH_m + n.H_2O \ , \ \Delta Hr_{298K} < 0$$

$CO + H_2O \leftrightarrow CO_2 + H_2, \ \Delta Hr_{298K} = -41 kJ.mol^{-1}$

$C + 2.H_2 \leftrightarrow CH_2, \ \Delta Hr_{298K} = -74.87 kJ.mol^{-1}$

$4.CnHm \leftrightarrow m.CH_4 + (4n - m).C, \ \Delta Hr_{298K} < 0$

Dans notre cas, on se place à l'équilibre et la détermination de la composition du gaz de synthèse se fait par minimisation de l'énergie de Gibbs.

Dans le procédé selon la présente invention, le gaz vecteur d'oxygène est comprimé avant gazéification de façon à gazéifier sous pression et obtenir un gaz de synthèse sous pression. Ici la dépense d'énergie pour comprimer le gaz vecteur d'oxygène est estimée à 1392 kWe. La compression de ce gaz nécessite de le refroidir, ce qui est fait par de l'eau pour produire de la vapeur dans un échangeur type tube - calandre soit 1,69 MWth.

Bilan de la gazéification :

| Composé | Entrée du réacteur | Sortie du réacteur |
|---|---|---|
| $CO_2$ | 90,4 kmol/h | 87,1 kmol/h |
| CO | 0 kmol/h | 43,9 kmol/h |
| $O_2$ | 7,63 kmol/h | 0 kmol/h |
| $H_2$ | 0 kmol/h | 32,4 kmol/h |
| $H_2O$ | 76,0 kmol/h | 53,6 kmol/h |
| $CH_4$ | 0 kmol/h | 19,8 kmol/h |
| $C_{18}H_{30}$ | 1,49 kmol/h | 0 kmol/h |

La gazéification s'opère à 40 bars, les réactifs entrent à 827 °C et sortent à 745 °C du fait de l'exothermicité de la gazéification en présence d'oxygène.

La réaction produit ainsi un gaz de synthèse dont 0 % sont extraits du procédé pour être valorisés, soit 6,44 T/h de gaz de synthèse à 40 bar et 745 °C qui sont est destinées à la fois à produire la chaleur nécessaire au fonctionnement du procédé mais aussi, après combustion, à servir de gaz vecteur pour rapporter de l'oxygène au gazéifieur. Ce gaz chaud et sous pression est détendu pour générer de l'énergie, qui doit alimenter le compresseur et ce dans un souci d'autonomie du procédé. L'énergie récupérée au niveau de la turbine est estimée à 1407 kWe.

Réacteur de réduction :

Dans ce réacteur, le gaz de synthèse est oxydé au contact du solide porteur d'oxygène selon les réactions et les enthalpies de réaction citées précédemment.

| Composé | Entrée du réacteur 886 °C | Sortie du réacteur 934 °C |
|---|---|---|
| $CO_2$ | 87,1 kmol/h | 151 kmol/h |
| CO | 43,9 kmol/h | 0 kmol/h |
| $H_2$ | 32,4 kmol/h | 0 kmol/h |
| $H_2O$ | 53,6 kmol/h | 125 kmol/h |
| $CH_4$ | 19,8 kmol/h | 0 kmol/h |

(suite)

| Composé | Entrée du réacteur 886 °C | Sortie du réacteur 934 °C |
|---|---|---|
| $(Fe_{0,6}Mn_{0,4})_2O_3$ | 3777 kmol/h | 3390 kmol/h |
| $\{MnO + 3.Fe_2MnO_4\}$ | 7,63 kmol/h | 85,2 kmol/h |

L'énergie récupérée au niveau de cette combustion est de 8,21 MWth.

60 % des fumées sont recyclés, le reste est extrait de l'unité. Il s'agit d'un flux composé uniquement d'eau et de dioxyde de carbone destiné à être récupéré, transporté et stocké. L'énergie potentiellement récupérable sur ce flux est estimée à 1,15 MWth.

Les fluides et solides sortent du réacteur de réduction à une température de 934 °C contre une température de 886 °C en entrée.

Valorisation de la chaleur :

La chaleur produite par le procédé et transportée par le solide est valorisable en sortie de réacteur de réduction. On peut valoriser ici jusqu'à 3,6 MWth. Le solide est à une température de 911 °C après valorisation de la chaleur.

Réacteur d'oxydation :

En sortie du réacteur de réduction, le solide porteur d'oxygène est dans son état le plus réduit. Dans le réacteur d'oxydation, il est réoxydé dans sa forme la plus oxydée au contact d'un flux d'air.

| Composé | Entrée du réacteur | Sortie du réacteur |
|---|---|---|
| N2 | 324 kmol/h à 25 °C | 324 kmol/h à 900 °C |
| O2 | 86,2 kmol/h à 25 °C | 1,02 kmol/h |
| $(Fe_{0,6}Mn_{0,4})_2O_3$ | 3390 kmol/h à 911 °C | 3816 kmol/h à 900 °C |
| $\{MnO + 3.Fe_2MnO_4\}$ | 85,2 kmol/h à 911 °C | 0 kmol/h |

L'énergie fournie dans ce réacteur par la réaction d'oxydation et pour amener les composés à 900 °C est de 0,99 MWth. Une partie de cette énergie est valorisable en récupérant la chaleur sur le flux d'air appauvri, soit 2,27 MWth.

Au final ce procédé produit :

8,09 MWth pour 0,82 T/h de charge C18H30. Cette chaleur comprend le réchauffage de la charge.

**Revendications**

1. Procédé de production d'énergie et/ou de gaz de synthèse par gazéification d'au moins une charge liquide et/ou solide dans au moins une boucle chimique comprenant au moins quatre zones réactionnelles distinctes d'oxydation, réduction, gazéification et production d'oxygène, dans lequel :

   a) on produit de l'oxygène dans une zone réactionnelle de production d'oxygène R2 en exposant un oxyde métallique dans son état d'oxydation maximal à une atmosphère gazeuse à faible pression partielle d'oxygène constituée d'un gaz vecteur comprenant les effluents de réduction;
   b) on transporte l'oxygène produit à l'étape a) au moyen du gaz vecteur dans une zone réactionnelle de gazéification R4 et on effectue la gazéification de la charge liquide et/ou solide par mise au contact dudit gaz vecteur enrichi en oxygène à haute température avec ladite charge pour produire le gaz de synthèse CO + H2;
   c) on effectue la réduction du solide porteur d'oxygène pour libérer de l'oxygène permettant d'oxyder le gaz de synthèse, dans une zone réactionnelle de réduction R3, la réaction de réduction dans ladite zone réactionnelle de réduction étant exothermique.
   d) on oxyde le solide porteur d'oxygène, qui a été au moins en partie réduit pour fournir de l'oxygène au système, au contact de l'air afin de lui rendre son état d'oxydation maximal, dans une zone réactionnelle d'oxydation R1,

   et dans lequel on utilise la chaleur fournie par les réactions intervenant dans ladite zone réactionnelle d'oxydation R1 et dans ladite zone réactionnelle de réduction R3 pour permettre le fonctionnement énergétique du procédé.

2. Procédé selon la revendication 1 dans lequel le gaz de synthèse est produit sous pression à l'étape b) et on effectue la détente du gaz de synthèse produit avant la réduction du solide porteur d'oxygène à l'étape c).

3. Procédé selon l'une des revendications 1 ou 2 dans lequel au moins une partie du gaz de synthèse produit est utilisée au sein du procédé, pour apporter la chaleur nécessaire au fonctionnement et éventuellement produire de la chaleur excédentaire qui pourra être valorisée.

4. Procédé selon la revendication 3 dans lequel au moins une partie du gaz de synthèse est envoyée dans la zone réactionnelle de réduction.

5. Procédé selon la revendication 4 dans lequel la totalité du gaz de synthèse est envoyée dans la zone réactionnelle de réduction.

6. Procédé selon la revendication 1 à 4 dans lequel au moins une partie du gaz de synthèse produit est valorisée en sortie de la zone réactionnelle de gazéification.

7. Procédé selon l'une des revendications précédentes dans lequel la charge liquide et/ou solide est choisie parmi le charbon, le coke de pétrole ou les charges liquides dont moins de 10% a un point d'ébullition inférieur à 340°C.

8. Procédé selon l'une des revendications précédentes dans lequel les zones réactionnelles de réduction, oxydation et production d'oxygène sont des zones réactionnelles distinctes situées dans un même réacteur.

9. Procédé selon la revendication 8 dans lequel le réacteur est un réacteur rotatif.

10. Procédé selon l'une des revendications 1 à 7 dans lequel les zones réactionnelles de réduction, oxydation et production d'oxygène sont situées dans des réacteurs distincts.

11. Procédé selon l'une des revendications précédentes dans lequel de l'énergie excédentaire exportable est récupérée par échange de chaleur à l'intérieur des zones réactionnelles ou sur les effluents gazeux.

12. Procédé selon l'une des revendications précédentes dans lequel :

   - la fraction de capacité de transfert restante X des oxydes métalliques est comprise entre 0.8 et 1 en sortie de la zone réactionnelle d'oxydation R1 ;
   - la fraction de capacité de transfert restante X est comprise entre 0 et 0,3 en sortie de la zone réactionnelle de réduction R3 ;
   - la fraction de capacité de transfert totale $\Delta X$ est comprise entre 0,01 et 1 dans la zone de production d'oxygène R2.

13. Procédé selon la revendication 12 dans lequel

   - la fraction de capacité de transfert restante X des oxydes métalliques est comprise entre 0,95 et 1 en sortie de la zone réactionnelle d'oxydation R1 ;
   - la fraction de capacité de transfert restante X est comprise entre 0 et 0,1 en sortie de la zone réactionnelle de réduction R3 ;
   - la fraction de capacité de transfert totale $\Delta X$ est comprise entre 0,05 et 0,5 dans la zone de production d'oxygène R2.

14. Utilisation du procédé selon l'une des revendications précédentes pour la production de chaleur.

15. Utilisation du procédé selon l'une des revendications 1 à 13 pour la production de gaz de synthèse sous pression.

**Claims**

1. A method of producing energy and/or synthesis gas through gasification of at least one liquid and/or solid feed in at least one chemical loop comprising at least four distinct oxidation, reduction, gasification and oxygen production reaction zones, wherein :

a) oxygen is produced in an oxygen production reaction zone R2 by exposing a metallic oxide in its state of maximum oxidation to a gaseous atmosphere with a low oxygen partial pressure consisting of a carrier gas comprising the reduction effluents ;

b) the oxygen produced In stage a) is transported by means of the carrier gas to a gasification reaction zone R4 and gasification of the liquid and/or solid feed is carried out by contacting said oxygen-enriched carrier gas at high temperature with said feed so as to produce synthesis gas $CO + H_2$ ;

c) reduction of the oxygen carrier solid is carried out so as to release oxygen allowing to oxidize the synthesis gas, in a reduction reaction zone R3, the reduction reaction in said reduction reaction zone being exothermic ;

d) the oxygen carrier solid that has been at least partly reduced to provide the system with oxygen is oxidized on contact with air so as to recover its maximum oxidation state, in an oxidation reaction zone R1,

and wherein the heat provided by the reactions involved in said oxidation reaction zone R1 and in said reduction reaction zone R3 is used to allow energetic operation of the method.

2. A method as claimed in claim 1, wherein the synthesis gas is produced under pressure In stage b) and expansion of the gas produced is carried out prior to reduction of the oxygen carrier solid in stage c).

3. A method as claimed in any one of claims 1 or 2, wherein at least part of the synthesis gas produced is used In the method to provide the heat required for operation and possibly to produce excess heat that can be upgraded.

4. A method as claimed in claim 3, wherein at least part of the synthesis gas is sent to the reduction reaction zone.

5. A method as claimed in claim 4, wherein all of the synthesis gas Is sent to the reduction reaction zone.

6. A method as claimed in claim 1 to 4, wherein at least part of the synthesis gas produced is upgraded at the outlet of the gasification reaction zone.

7. A method as claimed in any one of the previous claims, wherein the liquid and/or solid feed is selected from among coal, petroleum coke or liquid feeds less than 10% of which has a boiling point temperature below 340°C.

8. A method as claimed in any one of the previous claims, wherein the reduction, oxidation and oxygen production reaction zones are distinct reaction zones located in a single reactor.

9. A method as claimed In claim 8, wherein the reactor is a rotary reactor.

10. A method as claimed in any one of claims 1 to 7, wherein the reduction, oxidation and oxygen production reaction zones are located in distinct reactors.

11. A method as claimed in any one of the previous claims, wherein the exportable excess energy is recovered by heat exchange inside the reaction zones or on the gaseous effluents.

12. A method as claimed In any one of the previous claims, wherein:

- the metallic oxide remaining transfer capacity fraction X ranges between 0.8 and 1 at the outlet of oxidation reaction zone R1;
- the remaining transfer capacity fraction X ranges between 0 and 0.3 at the outlet of reduction reaction zone R3 ;
- the total transfer capacity fraction $\Delta X$ ranges between 0.01 and 1 in oxygen production zone R2.

13. A method as claimed in claim 12, wherein:

- the metallic oxide remaining transfer capacity fraction X ranges between 0.95 and 1 at the outlet of oxidation reaction zone R1 ;
- the remaining transfer capacity fraction X ranges between 0 and 0.1 at the outlet of reduction reaction zone R3 ;
- the total transfer capacity fraction $\Delta X$ ranges between 0.05 and 0.5 in oxygen production zone R2.

14. Use of the method as claimed In any one of the previous claims for the production of heat.

**15.** Use of the method as claimed in any one of claims 1 to 13 for the production of synthesis gas under pressure.

**Patentansprüche**

**1.** Verfahren zur Erzeugung von Energie und/oder Synthesegas durch Vergasen mindestens einer flüssigen und/oder festen Charge in einem chemischen Schleifenreaktor, der mindestens vier verschiedene Reaktionsbereiche zur Oxidation. Reduktion, Vergasung und Sauerstofferzeugung umfasst, wobei

a) Sauerstoff in einem Reaktionsbereich zur Sauerstofierzeugung R2 erzeugt wird, indem ein Metalloxid in seinem maximalen Oxidationszustand einer Gasatmosphäre mit geringem Sauerstoffpartialdruck ausgesetzt wird, welche aus einem Trägergas besteht, das die Stoffströme aus dem Reduktionsvorgang umfasst;
b) der Sauerstoff, welcher in Schritt a) erzeugt wurde, mittels des Trägergases in einem Vergasungsreaktionsbereich R4 befördert wird und die flüssige und/oder feste Charge vergast wird, indem sie mit dem Trägergas, welches mit Sauerstoff angereichert ist, bei hohen Temperaturen in Kontakt gebracht wird, um das Synthesegas CO + H2 zu erzeugen;
c) der feste Sauerstoffträger in einem Reduktionsreaktionsbereich R3 reduziert wird, um Sauerstoff freizusetzen, welcher es ermöglicht, das Synthesegas zu oxidieren, wobei die Reduktionsreaktion in dem Reduktionsreaktionsbereich exotherm ist.
d) der feste Sauerstoffträger, welcher mindestens teilweise reduziert wurde, um dem System Sauerstoff zu liefern, in einem Oxidationsreaktionsbereich R1 durch Luftkontakt oxidiert wird, um ihn wieder in seinen maximalen Oxidationszustand zu versetzen,

und wobei die Wärme, die von den Reaktionen geliefert wird, welche in dem Oxidationsreaktionsbereich R1 und in dem Reduktionsreaktionsbereich R3 ablaufen, dazu genutzt wird, den betrieblichen Energiebedarf des Verfahrens zu decken.

**2.** Verfahren nach Anspruch 1, wobei das Synthesegas in Schritt b) unter Druck erzeugt wird und das erzeugte Synthesegas vor der Reduktion des festen Sauerstoffträgers in Schritt c) entspannt wird.

**3.** Verfahren nach einem der Ansprüche 1 oder 2, wobei mindestens ein Teil des erzeugten Synthesegases innerhalb des Verfahrens verwendet wird, um die Wärme zu liefern, welche für den Betrieb erforderlich ist, und möglicherweise überschüssige Wärme zu erzeugen, die genutzt werden kann.

**4.** Verfahren nach Anspruch 3, wobei mindestens ein Teil des Synthesegases in den Reduktionsreaktionsbereich geleitet wird.

**5.** Verfahren nach Anspruch 4, wobei die Gesamtheit des Synthesegases in den Reduktionsreaktionsbereich geleitet wird.

**6.** Verfahren nach Anspruch 1 bis 4, wobei mindestens ein Teil des erzeugten Synthesegases genutzt wird, wenn es aus dem Vergasungsreaktionsbereich austritt.

**7.** Verfahren nach einem der vorhergehenden Ansprüche, wobei die flüssige und/oder feste Charge aus Kohle, Petrolkoks oder flüssigen Chargen, von denen weniger als 10 % einen Siedepunkt von weniger als 340 °C hat, ausgewählt ist.

**8.** Verfahren nach einem der vorhergehenden Ansprüche, wobei es sich bei den Reaktionsbereichen zur Reduktion, Oxidation und Sauerstofferzeugung um verschiedene Reaktionsbereiche handelt, die in ein und demselben Reaktor gelegen sind.

**9.** Verfahren nach Anspruch 8, wobei es sich bei dem Reaktor um einen Drehreaktor handelt.

**10.** Verfahren nach einem der Ansprüche 1 bis 7, wobei die Reaktionsbereiche zur Reduktion, Oxidation und Sauerstofferzeugung in verschiedenen Reaktoren gelegen sind.

**11.** Verfahren nach einem der vorhergehenden Ansprüche, wobei die anfallende überschüssige Energie durch Wärmeaustausch im Inneren der Reaktionsbereiche oder an den gasförmigen Stoffströmen gewonnen wird.

**12.** Verfahren nach einem der vorhergehenden Ansprüche, wobei

- der verbleibende Anteil der Übertragungskapazität X der Metalloxide im Bereich von 0,8 bis 1 liegt, wenn sie aus dem Oxidationsreaktionsbereich R1 austreten;
- der verbleibende Anteil der Übertragungskapazität X beim Austritt aus dem Reduktionsreaktionsbereich R3 im Bereich von 0 bis 0,3 liegt;
- der Gesamtanteil der Übertragungskapazität $\Delta X$ im Sauerstofferzeugungsbereich R2 im Bereich von 0,01 bis 1 liegt.

**13.** Verfahren nach dem Anspruch 12, wobei

- der verbleibende Anteil der Übertragungskapazität X der Metalloxide im Bereich von 0,95 bis 1 liegt, wenn sie aus dem Oxidationsreaktionsbereich R1 austreten;
- der verbleibende Anteil der Übertragungskapazität X beim Austritt aus dem Reduktionsreaktionsbereich R3 im Bereich von 0 bis 0,1 liegt;
- der Gesamtanteil der Übertragungskapazität $\Delta X$ im Sauerstofferzeugungsbereich R2 im Bereich von 0,05 bis 0,5 liegt.

**14.** Verwendung des Verfahrens nach einem der vorhergehenden Ansprüche zur Erzeugung von Wärme.

**15.** Verwendung des Verfahrens nach einem der Ansprüche 1 bis 13 zur Erzeugung von Synthesegas, das unter Druck steht.

**FIG. 1**

**FIG. 2**

**FIG. 3A**

**FIG. 3B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007039687 A
- FR 2850156
- WO 2007082089 A2
- WO 2008036902 A2

**Littérature non-brevet citée dans la description**

- **Mostafa et al.** *Ind. Eng. Chem. Res.,* 1996, vol. 35 (1